# EUROPEAN PATENT SPECIFICATION

(11) **EP 4 634 615 B1**
(45) Date of publication and mention of the grant of the patent: **28.10.2026**
(21) Application number: 23840774.6
(22) Date of filing: 12.12.2023
(51) Int. Cl.: G01C 19/72, G02B 6/44

(54) **A GYROSCOPE FIBER OPTIC COIL MANUFACTURING SYSTEM**
HERSTELLUNGSSYSTEM FÜR EINE GYROSKOP-GLASFASERSPULE
SYSTÈME DE FABRICATION DE BOBINE DE FIBRE OPTIQUE DE GYROSCOPE

(30) Priority: 13.12.2022 IT 202200025440
(43) Date of publication of application: 22.10.2025
(73) Proprietor: Civitanavi Systems S.p.A., 63821 Porto Sant'Elpidio (FM) (IT)
(72) Inventor: PIZZARULLI, Andrea, 63821 Porto Sant EIpidio (FM) (IT); SGUAZZOTTI, Alessandro, 63821 Porto Sant EIpidio (FM) (IT); BELLUCO, Paolo, 63821 Porto Sant EIpidio (FM) (IT)
(74) Representative: Fiume, Orazio
(86) International application number: PCT/IB2023/062525
(87) International publication number: WO 2024/127238

(56) References cited:
- CN-A- 103 837 146
- FRAUNHOFER USA CMI: "Fiber Optic Gyroscope Coil Winding", 16 October 2015 (2015-10-16), XP093058339, Retrieved from the Internet <URL:https://www.youtube.com/watch?v=d93gnBQoK2k> [retrieved on 20230627]
- PAVLATH GEORGE A ED - HEMMATI HAMID *1954-* [HERAUSGEBERIN] IDENTITY ET AL: "Fiber optic gyros from research to production", PROCEEDINGS OF SPIE; [PROCEEDINGS OF SPIE ISSN 0277-786X VOLUME 10524], SPIE, US, vol. 9852, 12 May 2016 (2016-05-12), pages 985205 - 985205, XP060068345, ISBN: 978-1-5106-1533-5, DOI: 10.1117/12.2228562
- GE SHUANG-CHAO ET AL: "A Highly Integrated Automatic Fiber Optical Gyroscope Sensing Coil Winding System", INTERNATIONAL JOURNAL OF CONTROL, AUTOMATION AND SYSTEMS, vol. 19, no. 2, 6 December 2020 (2020-12-06), pages 1041 - 1053, XP037404561, ISSN: 1598-6446, DOI: 10.1007/S12555-020-0040-6
- SHARON A ET AL: "Development of an automated fiber optic winding machine for gyroscope production", ROBOTICS AND COMPUTER INTEGRATED MANUFACTURING, ELSEVIER SCIENCE PUBLISHERS BV., BARKING, GB, vol. 17, no. 3, 1 June 2001 (2001-06-01), pages 223 - 231, XP004234142, ISSN: 0736-5845, DOI: 10.1016/S0736-5845(00)00030-2

## Description

### Field of application of the invention

The present invention relates to the field of manufacturing optical fiber coils for gyroscopes.

### State of the art

Fiber Optic Gyroscopes (FOGs) are sensing devices for a wide range of applications: in navigation and positioning systems, in angular velocity sensors, in stabilization equipment and in backup systems for driving autonomous vehicles in remote areas not accessible to GPS, etc.

A high-performance FOG must accurately detect phase differences between two optical signals due to rotation, minimizing or compensating phase differences due to other sources, such as temperature effects.

Existing gyro coil winding techniques require high manual skill for total precision. Attempts have been made to automate the winding of quadrupole gyro coils, but these attempts have only succeeded for very low performance coils. The technician makes corrections in case of errors, before applying the glue for each layer of the coil.

Generally, the technician works with a plastic nib with a flexible tip to guide the fiber during its winding in order to avoid overlapping. Among other things, since these are fibers with a very limited section, the technician is required to make a considerable visual effort to follow the process and intervene promptly, unwinding and rewinding the fiber in case of imperfections.

For this purpose, the technician controls the rotation motion of the mandrel, forward and reverse, on which the coil is wound.

For this reason, the technician must take breaks to rest his vision and regain the right concentration.

Because quadrupole winding is slow and painstaking work, the number of technicians capable of manufacturing high-performance coils is limited.

All this places a strong constraint on the achievable production volume which leads to high production costs of the gyroscope.

Fraunhofer Usa CMI: "Fiber Optic Gyroscope Coil Winding" 16 October 2015, retrieved from the Internet at URL:https://www.youtube.com/Watch?v=d93gnBQoK2k discloses an automatic winding of gyroscope by means of a movable disk. Unless specifically excluded in the detailed description that follows, what is described in this chapter is to be considered as an integral part of the detailed description.

### Abstract of the invention

The purpose of the present invention is to automate the procedure for winding the optical fiber to form a coil suitable for installation in a gyroscope.

The basic idea of the present invention is to implement a robotic arm to which is fixed a first nib made of plastic material with a flexible tip currently in use by winding technicians. This robotic arm has the task of guiding the fiber during winding. One or more optical means are arranged to continuously acquire images of the coil during the winding process. A computer is operationally connected with the robotic arm and with the at least one optical means and with the means for controlling the rotation of the mandrel. Running on the computer is a neural network arranged to control the robotic arm and the means for controlling the rotation of the mandrel based on the continuously acquired images.

The system also comprises a training and supervisory station to accommodate a winding technician including:
- at least one display, operationally connected with said one or more optical means for projecting the continuously acquired images,
- a man/machine interface device comprising
   ∘ a second nib, with a haptic interface, similar to the first nib, equipped with a force and/or deformation and position sensor and
   ∘ a support system for the second nib equipped with means for acquiring the spatial position of the second nib suitable for detecting a roto-translation of the second nib imposed by the winding technician, and an interface with the second nib equipped with a load cell,
- man/machine interface means for the acquisition of commands regarding the control of the mandrel rotation.

Preferably, the system also comprises a glue dispenser and glue dispenser control means operationally connected with said computer and with further man/machine interface means associated with the training station.

The dependent claims describe preferred embodiments of the invention, forming an integral part of the present description.

### Brief description of the figures

Further objects and advantages of the present invention will be clear from the following detailed description of an example of its embodiment (and its variants) and from the attached drawings given purely for explanatory and non-limiting purposes, in which:
figure 1 shows an example of a winding system according to the present invention;
figures 2 and 3 show details of the system according to figure 1 ;
figure 4 shows a flow diagram representative of the circulation of information in the system shown in figure 1. The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

It is worth highlighting that the use of a neural network or an inferential engine or fuzzy logic is completely equivalent.

The elements and characteristics illustrated in the various preferred embodiments, including the drawings, can be combined with each other without departing from the scope of protection of the present application as described below.

### Detailed description of implementation examples

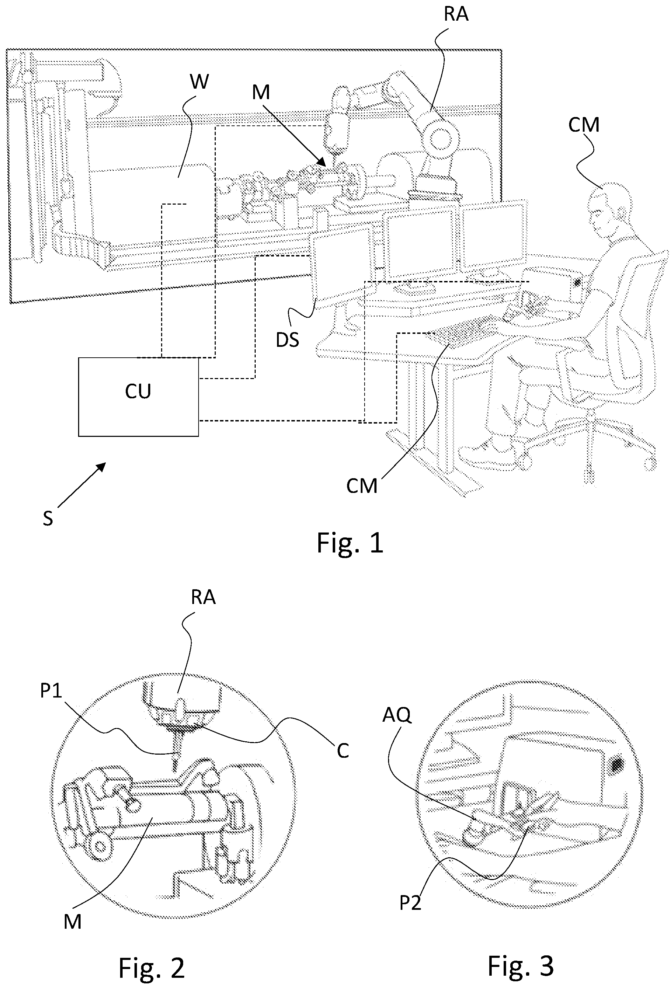

Figure 1 shows an example of a gyroscope fiber optic coil winding system.

The system comprises
- a mandrel M with relative means W for actuating the forward and reverse rotation for winding or unwinding the optical fiber coil; in general it is a winding device known in itself and controlled directly by the winding technician, when he operates directly on the coil;
- a robotic arm RA equipped with a first nib P1, in the terminal part, having an elongated and partially flexible shape to guide the positioning of the optical fiber during its winding on the mandrel M; preferably, the interface between the nib and the last joint of the robotic arm includes a force sensor arranged to measure forces and torques exchanged between the first nib and the robotic arm as a reaction of the contact between the first nib and the optical fiber; alternatively the first nib is equipped with at least one strain gauge;
- one or more optical means C are arranged to continuously acquire images of the coil during the winding process; preferably the optical detection means comprise a camera; it is preferably fixed to the robotic arm to adequately frame the tip of the first nib, but it can also be associated with a fixed point of the environment in which the system is placed;
- A computer CU operatively connected with the robotic arm RA, with the one or more optical means C and with the actuation means W of the mandrel rotation. The computer runs a learning neural network arranged for
   . control the robotic arm and to
   . define the means for controlling the actuation means W of the mandrel rotation as a function of the continuously acquired images.

The system also comprises a supervision and training station to accommodate a TCH winding technician
- at least one display DS, to project the images continuously acquired by one or more optical means C,
- a man/machine interface device comprising
   ∘ a second nib P2, similar to the first nib P1, and a second nib holder AQ equipped with means for acquiring the spatial position of the second nib suitable for detecting a rototranslation of the second nib imposed by the winding technician, and in which the support is equipped with actuators to make the second nib haptic ,
   ∘ man/machine interface means CM for controlling the mandrel rotation actuation means W.

The computer CU is arranged to acquire the images from the one or more optical means C and use them for the control of the robotic arm RA. At the same time, the images are shown on at least one DS display so that, if necessary, the TCH winding technician can monitor the behavior of the robotic arm.

It is worth highlighting that the present solution, even without the autonomous capabilities of the CU computer to control the manufacturing of a coil, would, however, make the posture of the winding technician more comfortable, who can be comfortably seated in his supervisory station rather than being standing near the coil.

In case of unsatisfactory behavior, the winding technician can take direct control of the actuation means W of the mandrel rotation and of the robotic arm RA using respectively
- the CM man/machine interface means which can be for example a keyboard or a mouse or a joystick, e
- the second nib P2.

The CU computer acquires, through the second nib holder AQ, the movements imparted to the second nib by the winding technician and controls the RA robotic arm to reproduce, in real time, the same movements.

Meanwhile, the neural network implemented in the same computer trains itself
- learning that the configuration of the fiber on the coil is deemed unsatisfactory by the winding technician and
- learning the movements necessary to correct this unsatisfactory configuration.

Evidently, to allow the winding technician to better train the neural network, it is advisable for the second nib to be haptic, reproducing the same resistant torques perceived by the RA robotic arm that activates the first nib.

The support system of the second nib is preferably of the pantograph type, also called DELTA and which in any case allows the operator to hold the haptic device like a normal nib and therefore without forcing the operator to use non-habitual grips. In other words, the operator must feel able to use his skills as if he were operating directly on the optical fiber, without the intermediation of the supervisory station and the robotic arm.

The robotic arm is preferably of the anthropomorphic type with six degrees of freedom, but a delta configuration with five degrees of freedom is also possible.

During the direct control of the winding operations, the neural network receives as input:
- the images acquired continuously using the at least one optical device;
- the position of the kinematic chain defining the robotic arm;
- the magnitude of the reaction forces perceived by the first nib in the contact of the nib tip with the optical fiber;
- angular position and rotation speed of the mandrel.
- Coil winding state data, such as number of layers, number of turns of each layer, fiber tension, coil size, mandrel size, fiber type;

During training, in which direct control of the winding operations lies with the winding technician, the neural network also receives input, in addition to the previous information,
- the spatial position of the second nib,
- the commands given by the wrapping technician via the CM man/machine interface.

The neural network is preferably of the deep supervised learning type. Supervised learning allows the operator to signal to the neural network during the learning phase which are the correct movements and the correct results, in a robust way and drastically reducing the possibility of incorrect learning by leaving the reporting of errors and the system guidance during error recovery. Deep learning has among its main characteristics that of excellent image analysis capacity. An example of a dataset useful for learning is one whose characteristics include the state of the winding, for example: images or film of the fiber wound on the mandrel and related characteristics such as the mutual distance between the fibres, height of the current coil with respect to to the other turns of the same layer, in order to visualize the correct or incorrect positioning of the fibres. Another aspect concerns the accelerations and/or speeds and/or positions of the mandrel, the forces and torques exerted on the nib, the commands sent by the haptic interface, when the robotic arm is controlled by the operator, with the acquisition of the positions, orientation, speed and angular accelerations of the haptic nib, quantity of glue released from the dispenser, fiber tension , section and type of optical fiber and mandrel section, coil dimensions and number of turns for each layer. All these characteristics then involve an evaluation of the quality of the winding by the operator also during the winding operations via haptic interface, usually described as "on-line" learning, for example in the case of supervised learning, which is useful for training the neural network inference engine.

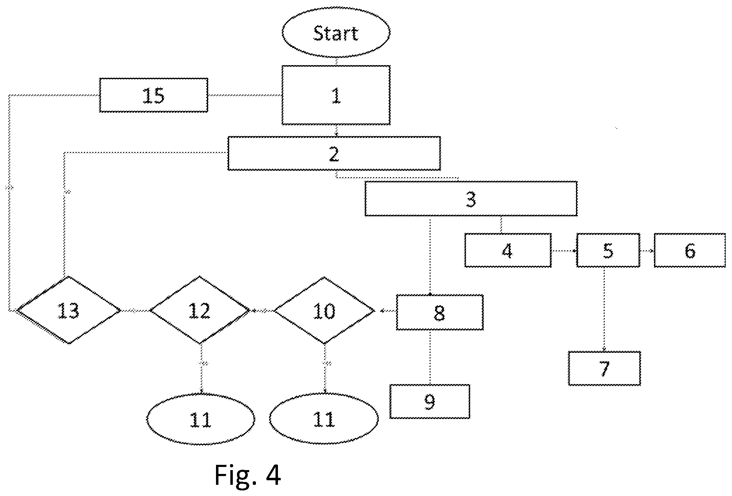

Figure 4 shows an exemplary flow diagram of the information circulation method according to the present invention.

Having defined the system as the assembly including the mandrel M with relative actuation means W for forward and reverse rotation, the robotic arm RA equipped with the nib P1, in the terminal part, in which the first nib has an elongated and partially flexible shape for guide the positioning of the optical fiber during its winding on the mandrel M, one or more optical means C arranged to continuously acquire images of the coil during the winding process and processing means CU.

The diagram begins with the START block, as always.
Step 1: Activating the system ,
Step 2: The processing means acquire information about
   - mandrel position,
   - mandrel speed,
   - or more sensors, such as load cells, encoders, strain gauges, etc. furthermore, the
   - trajectory of the nib etc.,
   - video stream from the camera and preferably also
   - quantity of glue distributed from a dispenser on the coil layer by layer;
   - fiber type, number of layers and number of turns in each layer,
   - fiber tension during winding;
Step 3: fusion of the previously acquired information, in order to create a dataset that correlates all the aforementioned information on the same timeline,
Step 4: memorization of the information processed in the previous step,
Step 5: Batch processing the fused data to enable iteratively
Step 6: Incrementally power a robotic arm control model e
Step 7: Real-time control and analysis of the winding process based on the control model generated in the previous step,
Step 8: Check whether the wrapping operation is finished, if so
Step 9: STOP, otherwise
Step 10: check if there are alarms or signals, where such alarms may be due either to quantities that do not fall within previously observed ranges, or because the control model is unable to independently control the system for any reason, if so
Step 11: STOP, otherwise go back to step 2.

It is worth highlighting that steps 1 to 6 must be performed in succession and resumed from step 1, at least once, in order to allow the system to process the information flows and generate at least a first model, which will subsequently be further updated, in the meantime, the subsequent steps 7 to 11 will be performed in real time. This is essentially a process performed in real time and a portion of the process, in particular steps 5 and 6 which are performed off-line to update the control model.

The present invention can advantageously be carried out by means of a computer program which includes coding means for carrying out one or more steps of the method, when this program is executed on a computer. It is therefore understood that the purpose of protection extends to said computer program and further to computer readable means comprising a recorded message, said computer readable means comprising program coding means for carrying out one or more steps of the method, when said program is run on a computer. Constructive variations to the non-limiting example described are possible, without however departing from the purpose of protection of the present invention, including all equivalent embodiments for a person skilled in the art, to the contents of the claims.

From the above description, the person skilled in the art is able to implement the object of the invention without introducing further construction details.

## Claims

1. A gyroscope fiber optic coil manufacturing system (S) comprising
- a mandrel (M) with corresponding actuation means (W) for forward and reverse rotation;
- one or more optical means (C) arranged to continuously acquire images of the coil during the winding process;
the system being **characterized in** comprising
- a robotic arm (RA) equipped with a first nib (P1), in the terminal part, wherein the first nib has an elongated and partially flexible shape to guide the positioning of the optical fiber during its winding on the mandrel (M);-processing means (CU) operatively connected with the robotic arm (RA), with the one or more optical means (C) and with the actuation means (W) of the mandrel rotation;
wherein said processing means is configured for
. controlling the robotic arm and for
. controlling the actuation means (W) of the rotation of the mandrel according to the images acquired continuously,
so as to control the manufacture of the optical fiber coil, and in comprising a supervisory station comprising
- at least one display (DS) for displaying the images continuously acquired by said one or more optical means (C),
- a man/machine interface device (P2, CM) comprising
∘ a second nib (P2),
∘ a second nib holder (AQ) system equipped with
+ a haptic interface and means for acquiring the spatial position of the second nib, able to detect a roto-translation of the second nib, and
+ a connection interface with the second nib equipped with a load cell arranged to measure an action on the second nib,
∘ man/machine interface means (CM) for controlling the mandrel rotation actuation means (W).

2. System according to claim 1, wherein said supervision station is arranged to take precedence in the control of said robotic arm (RA) and of said mandrel rotation actuation means (W) with respect to said processing means (CU).

3. System according to any one of claims 1 or 2, wherein said processing means (CU) are configured by means of a learning neural network.

4. System according to claim 3, wherein said neural network is arranged to enter learning mode when said supervisory station takes direct control of the robotic arm (RA) and/or of said mandrel rotation actuation means (W).

5. System according to claim 3 or 4, wherein said neural network is configured to be trained by means of control signals generated by said means for acquiring the spatial position of the second nib and by said man/machine interface (CM) means of said supervisory station.

6. A system according to any one of claims 3 - 5, wherein said neural network is configured to be trained by means of a stream of images of the coil, during a winding process, generated by said optical means.

## Patentansprüche

1. System (S) zur Herstellung von Gyroskop-Faseroptikspulen, umfassend
- einen Dorn (M) mit entsprechenden Betätigungsmitteln (W) für die Vorwärts- und Rückwärtsdrehung;
- eine oder mehrere optische Mittel (C) zur kontinuierlichen Bildaufnahme der Spule während des Wickelvorgangs;
wobei das System ist **dadurch gekennzeichnet**, das es umfasst:
- einen Roboterarm (RA) mit einer ersten Spitze (P1) im Endbereich, wobei die erste Spitze eine längliche und teilweise flexible Form aufweist, um die Positionierung der optischen Faser während des Wickelvorgangs auf dem Dorn (M) zu führen;
- Verarbeitungsmittel (CU), die mit dem Roboterarm (RA), mit einen oder mehreren optischen Mittel (C) und mit der Betätigungsmittel (W) für die Dornrotation operativ verbunden sind;
wobei die Verarbeitungsmittel wie folgt konfiguriert sind:
. Steuerung des Roboterarms und
. Steuerung der Betätigungsmittel der Dornrotation anhand der kontinuierlich aufgenommener Bilder,
um die Herstellung der optischen Faserspule zu steuern,
und um eine Überwachungsstation zu umfassen,
- mit mindestens einem Display (DS) zur Anzeige der kontinuierlich erfassten Bilder durch das eine oder mehrere optische Mittel (C),
- mit einer Mensch-Maschine-Schnittstellenvorrichtung (P2, CM), umfassend
∘ eine zweite Spitze (P2),
∘ einen zweiten Spitzenhalter (AQ), ausgestattet mit
+ eine haptische Schnittstelle und Mittel zur Erfassung der räumlichen Position der zweiten Spitze, die in der Lage sind, eine Rotations- und Translationsbewegung der zweiten Spitze zu erkennen, und
+ eine Verbindungsschnittstelle mit der zweiten Spitze, die mit einer Kraftmessdose zur Messung einer Einwirkung auf die zweite Spitze ausgestattet ist,
∘ Mensch/Maschine-Schnittstellenmittel (CM) zur Steuerung der Betätigungsmittel (W) der Dornrotation.

2. System nach Anspruch 2, wobei die Überwachungsstation so angeordnet ist, dass sie bei der Steuerung des Roboterarms (RA) und der Betätigungsmittel (W) des Dornrotation Vorrang vor der Bearbeitungsmittel (CU) hat.

3. System nach einem der Ansprüche 1 oder 2, wobei die Verarbeitungsmittel (CU) mittels eines lernenden neuronalen Netzes konfiguriert sind.

4. System nach Anspruch 3, wobei das neuronale Netzwerk so ausgelegt ist, dass es in den Lernmodus wechselt, wenn die Überwachungsstation die direkte Steuerung des Roboterarms (RA) und/oder der genannten Betätigungsmittel (W) der Dornrotation übernimmt.

5. System nach Anspruch 3 oder 4, wobei das neuronale Netzwerk so konfiguriert ist, dass es mittels von Steuersignalen trainiert wird, die von der Einrichtung zur Erfassung der räumlichen Position der zweiten Spitze und der Mensch-Maschine-Schnittstellenmittel (CM) der genannten Überwachungsstation erzeugt werden.

6. System nach einem der Ansprüche 3 bis 5, wobei das neuronale Netzwerk so konfiguriert ist, dass es mittels eines Stroms von Bildern der Spule während eines Wickelvorgangs trainiert werden kann, die von den optischen Mitteln erzeugt werden.

## Revendications

1. Système de fabrication de bobines à fibres optiques gyroscopiques (S) comprenant
- un mandrin (M) avec des moyens d'actionnement correspondants (W) pour la rotation avant et arrière;
- un ou plusieurs moyens optiques (C) agencés pour acquérir en continu des images de la bobine pendant le processus d'enroulement;
le système étant **caractérisé en ce qu'**il comprend
- un bras robotisé (RA) équipé d'une première pointe (P1) à son extrémité, dans lequel la première pointe présente une forme allongée et partiellement flexible afin de guider le positionnement de la fibre optique lors de son enroulement sur le mandrin (M);
- des moyens de traitement (CU) reliés fonctionnellement au bras robotisé (RA), à un ou plusieurs moyens optiques (C) et avec les moyens d'actionnement (W) de la rotation du mandrin;
dans lequel lesdits moyens de traitement sont configurés pour
. commander le bras robotisé et pour
. commander les moyens d'actionnement (W) de la rotation du mandrin en fonction des images acquises en continu,
afin de commander la fabrication de la bobine de fibre optique, et comprenant une station de supervision comprenant
- au moins un écran (DS) pour l'affichage des images acquises en continu par ledit ou lesdits moyens optiques (C),
- un dispositif d'interface homme/machine (P2, CM) comprenant
∘ une deuxième pointe (P2),
∘ un deuxième système de porte-pointe (AQ) équipé de
+ une interface haptique et des moyens d'acquisition de la position spatiale de la deuxième pointe, capables de détecter une roto-translation de la deuxième pointe, et
+ une interface de connexion avec la deuxième pointe équipée d'une cellule de charge prévue pour mesurer une action sur la deuxième pointe,
∘ des moyens d'interface homme/machine (CM) pour commander le moyen d'actionnement de la rotation du mandrin (W).

2. Système selon la revendication 1, dans lequel ladite station de supervision est agencée pour prendre la priorité dans le contrôle dudit bras robotisé (RA) et desdits moyens d'actionnement de rotation du mandrin (W) par rapport auxdits moyens de traitement (CU).

3. Système selon l'une quelconque des revendications 1 ou 2, dans lequel lesdits moyens de traitement (CU) sont configurés au moyen d'un réseau neuronal d'apprentissage.

4. Système selon la revendication 3, dans lequel ledit réseau neuronal est agencé pour entrer en mode d'apprentissage lorsque ladite station de supervision prend le contrôle direct du bras robotisé (RA) et/ou de ce moyen d'actionnement de rotation du mandrin (W).

5. Système selon la revendication 3 ou 4, dans lequel ledit réseau neuronal est configuré pour être entraîné au moyen de signaux de commande générés par lesdits moyens d'acquisition de la position spatiale de la deuxième pointe et par lesdits moyens d'interface homme-machine (CM) de ladite station de supervision.

6. Système selon l'une quelconque des revendications 3 à 5, dans lequel ledit réseau neuronal est configuré pour être entraîné au moyen d'un flux d'images de la bobine, pendant un processus d'enroulement, générées par lesdits moyens optiques.
